# EUROPEAN PATENT SPECIFICATION

(11) **EP 1 253 368 B1**
(45) Date of publication and mention of the grant of the patent: **06.08.2008**
(21) Application number: 02405323.3
(22) Date of filing: 19.04.2002
(51) Int. Cl.: F16N 7/38

(54) **Lubrication system and lubricating oil feeding device**
Schmierungssystem und Ölzuführungsvorrichtung
Dispositif de lubrification et dispositif d'alimentation en huile

(30) Priority: 24.04.2001 JP 2001125432
(43) Date of publication of application: 30.10.2002
(73) Proprietor: Lube Corporation, Shinjuku-ku, Tokyo 169-0051 (JP)
(72) Inventor: Ozeki, Noboru, c/o Lube Co. Ltd., Shinjuku-ku, Tokyo 169-0051 (JP)
(74) Representative: Liebetanz, Michael

(56) References cited:
- EP-A- 0 473 385
- EP-A- 1 052 445
- US-A- 3 145 803
- US-A- 4 143 995

## Description

### BACKGROUND OF THE INVENTION

### Field of the Invention

The present invention relates to a lubrication system having two system lines of a depressurization line in which depressurization is needed for the operation of a valve to discharge lubricating oil such as grease or oil and a non-depressurization line in which depressurization is not needed, and a lubricating oil feeding device which is effectively used in the lubrication system.

### Description of the Related Art

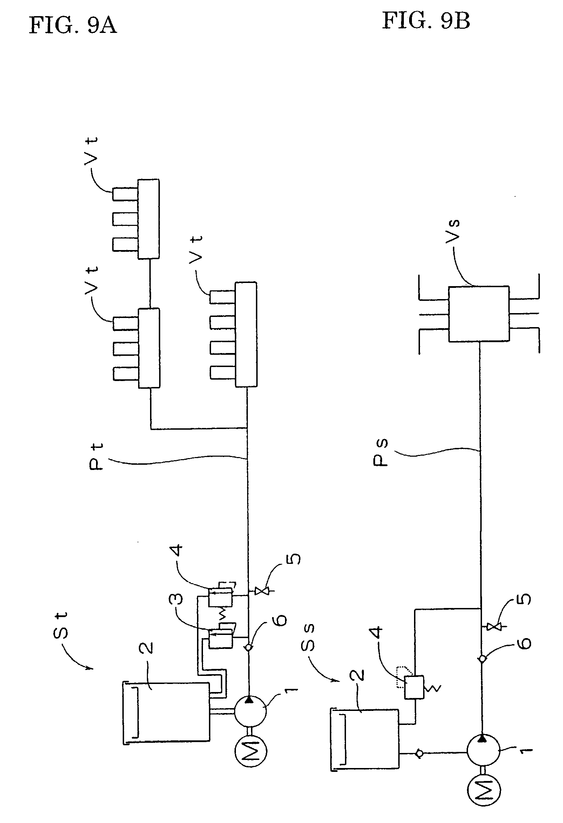

As a lubrication system, there is a grease lubrication system disposed in, for example, a resin or metal injection molding machine. As shown in Fig. 9A, the lubrication system uses a well-known single metering valve Vt having a single piston (not shown), which is reciprocated due to pressurization and depressurization of lubricating oil to discharge the lubricating oil, and a discharge opening corresponding to the piston, the amount of discharge by one shot of the valve being about 0.03 to 1.5 ml (0.03 to 1.5 cc). The valves Vt are disposed in the corresponding portions.

Since the single metering valve Vt is operated due to pressurization and depressurization of the lubricating oil to discharge the lubricating oil, the depressurization is needed. Accordingly, the valve is disposed in a depressurization line Pt in which the depressurization is performed.

A lubricating oil feeding device St for the depressurization line Pt has a motor-operated pump 1 for feeding lubricating oil stored in a lubricating oil storage 2 to the depressurization line Pt. An automatic depressurizing valve 3 for forcedly depressurizing the depressurization line Pt when the pump 1 is stopped is connected to the pump 1 to constitute the device.

As shown in Fig. 9A, a safety relief valve 4 to let the lubricating oil to escape when the pressure in the line becomes a high pressure, a manual air vent valve 5, and a one-way check valve 6 disposed in a discharge line of the pump 1 are arranged in the depressurization line Pt.

As to feeding the lubricating oil, the injection molding machine has a portion such as a toggle portion in which the relatively small amount of oil is required and a portion such as a ball thread in which the relatively large amount of oil is required, the ball thread having no sealed portion and being open. When the portion with the large amount of oil is set to the reference, the amount of oil for the portion in which the relatively small amount of oil is required is too much, resulting in waste of oil.

Accordingly, the following arrangement is possible. The portion such as the toggle portion in which the relatively small amount of oil is required is separated from the portion such as the open ball thread having no sealed portion in which the relatively large amount of oil is required. The foregoing single metering valve Vt is applied to the portion in which the relatively small amount of oil is required. The valves Vt are arranged in the corresponding portions. On the other hand, as shown in Fig. 9B, the well-known progressive metering valve Vs having a plurality of pistons (not shown), which are sequentially reciprocated due to pressurization of the lubricating oil to discharge the lubricating oil, and the plurality of pairs of discharge openings, each pair corresponding to each piston, is applied to the portion in which the relatively large amount of oil is required. The valves Vs are arranged in the corresponding portions.

In the progressive metering valve Vs, the amount of discharge by one stroke of the piston is set to, for example, about 0.1 ml. The piston is continuously moved to continuously feed the lubricating oil. Alternatively, on the basis of such a cycle that the piston is moved as many as predetermined strokes and is then suspended for a predetermined period, the relatively large amount of lubricating oil is intermittently fed as much as the predetermined quantity.

Since depressurization is not needed for the operation of the progressive metering valve Vs, the valve Vs is disposed in the non-depressurization line Ps in which the depressurization is not performed.

The lubricating oil feeding device Ss for the non-depressurization line Ps has the motor-operated pump 1 for feeding the lubricating oil stored in the lubricating oil storage 2 to the non-depressurization line Ps and does not have an automatic depressurizing valve. In other words, in the non-depressurization line Ps, the depressurization is not performed in order to hold the pressure in the line when the pump is stopped, discharge the lubricating oil from the progressive metering valve Vs in proper quantities, and keep the correct amount of discharge. The function to prevent the depressurization is realized by the one-way check valve 6 provided for the discharge line of the pump 1 of the lubricating oil feeding device Ss.

As shown in Fig. 9B, the non-depressurization line Ps has the safety relief valve 4 to let the lubricating oil to escape when the pressure in the line becomes a high pressure and the manual air vent valve 5.

In the lubrication system having the above-mentioned two system lines of the depressurization line Pt and the non-depressurization line Ps, since the pressure state in one line is different from that of the other line, the different lubricating oil feeding devices St and Ss have to be used.

As mentioned above, for example, in the lubrication system used in the injection molding machine, the different lubricating oil feeding devices St and Ss are provided for the two system lines of the depressurization line Pt and the non-depressurization line Ps, respectively. Accordingly, each line requires the pump 1. There is a problem in that the system becomes complicated and the cost is increased as much as the pumps.

### SUMMARY OF THE INVENTION

The present invention is made in consideration of the above problem and it is an object of the present invention to provide a lubrication system in which lubricating oil can be fed to each line through one pump without deteriorating the functions of two system lines of a depressurization line and a non-depressurization line, so that the system can be simplified and the cost can be reduced, and a lubricating oil feeding device which is effectively used in the system.

To accomplish the above object, according to the present invention, there is provided a lubrication system having two system lines of a depressurization line, to which lubricating oil is fed and in which depressurization is needed, and a non-depressurization line, to which the lubricating oil is fed and in which the depressurization is not needed, said system characterized in that:
the depressurization line and the non-depressurization line which are arranged in parallel to each other;
a pump feeds the lubricating oil to the depressurization line and the non-depressurization line; and
a switching valve is connected to the pump and is switched so that the lubricating oil from the pump can be fed to the depressurization line or the non-pressurization line.

Accordingly, when the switching valve is switched, the lubricating oil can be fed to each line through the pump without deteriorating the functions of the two system lines of the depressurization line and the non-depressurization line, so that the system can be simplified and the cost can be reduced.

More specifically, according to the present invention, there is provided a lubrication system having two system lines of a depressurization line, in which a valve which is operated due to pressurization and depressurization of lubricating oil to discharge the lubricating oil is arranged and the depressurization is needed for the operation of the valve, and a non-depressurization line, in which a valve to discharge the lubricating oil by pressurizing the lubricating oil is arranged and the depressurization is not needed for the operation of the valve, said system characterized in that:
the depressurization line and the non-depressurization line being arranged in parallel to each other;
a pump feeds the lubricating oil stored in a lubricating oil storage to the depressurization line and the non-depressurization line; and
a switching valve which is connected to the pump, which is switched so that the lubricating oil from the pump can be fed to the depressurization line or the non-depressurization line, and the depressurization line can be depressurized at least when the pump is not connected to the depressurization line.

Accordingly, for example, the following lubrication is performed. When the lubrication is performed in the depressurization line, the switching valve is switched to connect the pump to the depressurization line and also move the pump. Subsequently, the pump is stopped and the switching valve is switched to connect the pump to the non-depressurization line. Consequently, since the lubricating oil is pressurized and depressurized in the depressurization line, the valve is operated to discharge the lubricating oil.

When the lubrication is performed in the non-depressurization line, the switching valve is switched to connect the pump to the non-depressurization line and also move the pump. Consequently, in the non-depressurization line, the valve is operated due to the pressurization of the lubricating oil, thereby discharging the lubricating oil. After that, when the motion of the pump is turned off, the valve stops discharging the lubricating oil.

As mentioned above, the lubrication in the depressurization line and the non-depressurization line is performed. In this instance, the pump can be connected to either the depressurization line or the non-depressurization line by merely switching the switching valve. Further, when the pump is not connected to the depressurization line, the depressurization line can be depressurized. Consequently, the lubricating oil can be fed to each line through one pump without deteriorating the functions of the two system lines of the depressurization line and the non-depressurization line, so that the lubrication can be simplified and the cost can be reduced.

Preferably, the switching valve has at least four ports of a primary-side discharge port which is connected to a discharge opening of the pump, a primary-side open port which is opened on the lubricating oil storage side, a secondary-side depressurization line port which is connected to the depressurization line, and a secondary-side non-depressurization line port which is connected to the non-depressurization line; and
said switching valve comprises a solenoid-operated valve which connects the primary-side discharge port to the secondary-side depressurization line port and shuts off the primary-side open port and the secondary-side non-depressurization line port from the primary-side discharge port and the secondary-side depressurization line port at ON time when the solenoid-operated valve is energized, and which connects the primary-side discharge port to the secondary-side non-depressurization line port and connects the primary-side open port to the secondary-side depressurization line port at OFF time when the solenoid-operated valve is not energized. As mentioned above, when the solenoid-operated valve is used as a switching valve, the valve can be easily built in the system.

Preferably, the lubrication system has a controller sets the operation to any one of three modes of a stop mode in which the motion of the pump and the solenoid-operated valve are set to an OFF state; a depressurization line feed mode in which the motion of the pump and the solenoid-operated valve are turned on or off synchronously with each other to feed the lubricating oil to the depressurization line; and a non-depressurization line feed mode in which when the solenoid-operated valve is turned off, the motion of the pump is turned on or off to feed the lubricating oil to the non-depressurization line. When the controller is disposed as mentioned above, various lubrication patterns can be realized by switching the mode of the controller, so that the versatility can be raised.

Preferably, the valve, which is arranged in the depressurization line, comprises a single piston, which is reciprocated due to pressurization and depressurization of the lubricating oil to discharge the lubricating oil, and a single metering valve having a discharge opening corresponding to the piston; and
the valve, which is arranged in the non-depressurization line, comprises a plurality of pistons, which are sequentially reciprocated due to pressurization of the lubricating oil to discharge the lubricating oil, and a progressive metering valve having plural pairs of discharge ports, each pair corresponding to each piston. Lubrication conditions of the lubrication portion can be satisfied without fault by each valve.

To solve the above problem, according to the present invention, there is provided a lubricating oil feeding device which can feed lubricating oil to two system lines of a depressurization line, in which a valve, operated due to pressurization and depressurization of the lubricating oil to discharge the lubricating oil, is arranged and depressurization is needed for the operation of the valve, and a non-depressurization line, in which a valve to discharge the lubricating oil by pressurizing the lubricating oil is arranged and the depressurization is not needed for the operation of the valve, said device characterized in that:
a pump feeds the lubricating oil stored in a lubricating oil storage to the depressurization line and the non-depressurization line; and
a switching valve is integrated with the pump to be connected thereto, is switched so that the lubricating oil from the pump can be fed to the depressurization line or the non-depressurization line, and the depressurization line can be depressurized at least when the pump is not connected to the depressurization line.

Accordingly, the pump can be connected to either the depressurization line or the non-depressurization line by merely switching the switching valve, and further, when the pump is not connected to the depressurization line, the depressurization line can be depressurized. Consequently, the pump can feed the lubricating oil to each line without deteriorating the functions of the two system lines of the depressurization line and the non-depressurization line, so that the lubrication can be simplified and the cost can be reduced.

Since the switching valve is integrated with the pump, the device is compact in size and it can be easily handled as compared with a case where the switching valve is separately arranged. Further, the piping operation can also be easily made, so that the working efficiency of installation can be raised.

Further preferably, the switching valve can be detached from the pump. In this constitution, a block having a discharge opening exclusively used for, e.g., the non-depressurization line can be attached instead of the switching valve. The pump can be easily changed to a pump having another formation, so that the versatility can be raised.

### BRIEF DESCRIPTION OF THE DRAWINGS

Fig. 1 is a diagram showing a lubrication system and a lubricating oil feeding device according to an embodiment of the present invention;
Fig. 2 is a front view showing the lubricating oil feeding device according to the present invention;
Fig. 3 is a side sectional view showing the lubricating oil feeding device according to the embodiment of the present invention;
Fig. 4 is a bottom plan view showing a pump of the lubricating oil feeding device according to the embodiment of the present invention;
Figs. 5A and 5B are views showing a switching valve of the lubricating oil feeding device according to the present embodiment of the present invention, Fig. 5A being a plan view and Fig. 5B being a front view;
Figs. 6A, 6B, and 6C are cross-sectional views showing the operation state of the switching valve of the lubricating oil feeding device according to the embodiment of the present invention, Fig. 6A showing the state of stop mode (non-depressurization line feed mode), Fig. 6B showing the state of depressurization line feed mode, and Fig. 6C showing the state of non-depressurization line feed mode (stop mode);
Fig. 7 is a timing chart showing an example of the operation flow of the switching valve, the pump, a single metering valve, and a progressive metering valve of the lubrication system according to the embodiment of the present invention;
Fig. 8 is a diagram showing a lubrication system according to another embodiment of the present invention; and
Fig. 9 is a diagram showing an example of a conventional lubrication system and a conventional lubricating oil feeding device.

### DETAILED DESCRIPTION OF THE PREFERRED EMBODIMENTS

A lubrication system according to an embodiment of the present invention and a lubricating oil feeding device used in the system will now be described hereinbelow with reference to the drawings. The lubrication system according to the embodiment is disposed in, for example, a resin or metal injection molding machine.

The present invention is not limited to the following embodiments but only limited to the enclosed claims expressing the scope of the invention.

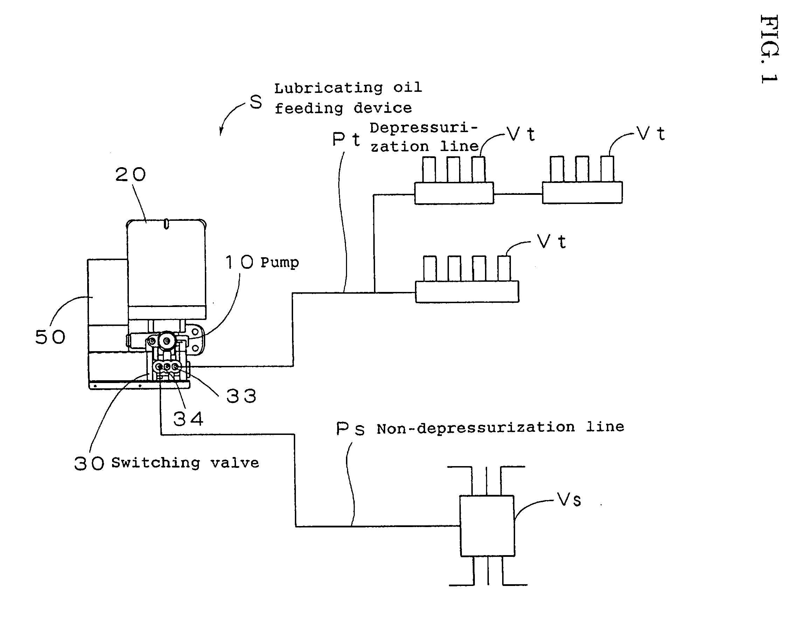

Figs. 1 to 7 show the lubrication system and the lubricating oil feeding device according to the embodiment of the present invention.

As shown in Fig. 1, in the lubrication system according to the embodiment, a portion such as a toggle portion, in which the relatively small amount of oil is required, is separated from a portion such as a ball thread, in which the relatively large amount of oil is required, the ball thread having no sealed portion and being open. The well-known single metering valve Vt is applied to the portion in which the relatively small amount of oil is required. The valve Vt includes a single piston (not shown), which is reciprocated due to pressurization or depressurization of lubricating oil to discharge the lubricating oil, and a discharge opening corresponding to the piston. The amount of discharge by one shot of the valve Vt is equal to about 0.03 to 1.5 ml. The valves Vt are arranged in the corresponding portions.

On the other hand, the well-known progressive metering valve Vs including a plurality of pistons (not shown), which are sequentially reciprocated due to pressurization of the lubricating oil to discharge the lubricating oil, and plural pairs of discharge openings, each pair corresponding to each piston, is applied to the portion in which the relatively large amount of oil is required. The valves Vs are disposed in the corresponding portions. In the progressive metering valve Vs, the amount of discharge by one stroke of the piston is set to, for example, about 0.1 ml. The piston is operated as many as predetermined strokes and is then suspended for a predetermined period, whereby the relatively large amount of lubricating oil is intermittently fed as much as the predetermined quantity.

Since the single metering valve Vt is operated due to pressurization and depressurization of the lubricating oil to discharge the lubricating oil, the depressurization is needed. Accordingly, the valve is arranged in the depressurization line Pt in which the depressurization is performed. On the other hand, the progressive metering valve Vs is arranged in the non-depressurization line Ps, in which depressurization is not performed, in order to maintain the pressure in the line when the pump is stopped, discharge the lubricating oil from the progressive metering valve Vs in proper quantities, and precisely keep the amount of discharge.

As mentioned above, the lubrication system according to the embodiment has two system lines, namely, the depressurization line Pt and the non-depressurization line Ps. The depressurization line Pt is arranged in parallel to the non-depressurization line Ps.

The lubrication system according to the embodiment uses a lubricating oil feeding device S having such a configuration that lubricating oil can be fed to the two system lines, namely, the depressurization line Pt and the non-depressurization line Ps.

Referring to Figs. 1 to 3, the fundamental configuration of the lubricating oil feeding device S includes a pump 10 for feeding stored lubricating oil to the depressurization line Pt and the non-depressurization line Ps, a lubricating oil storage 20 for storing the lubricating oil, and a switching valve 30 which is integrated with the pump 10 to be connected thereto, which is switched so that the lubricating oil from the pump 10 can be fed to either the depressurization line Pt or the non-depressurization line Ps, and which can depressurize the depressurization line Pt at least when the pump is not connected to the depressurization line Pt (when the pump is connected to the non-depressurization line Ps).

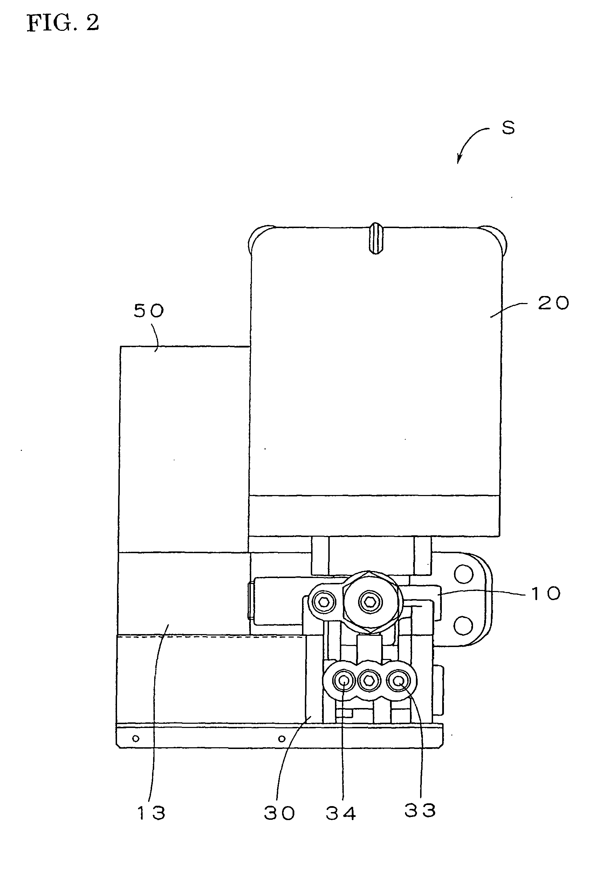

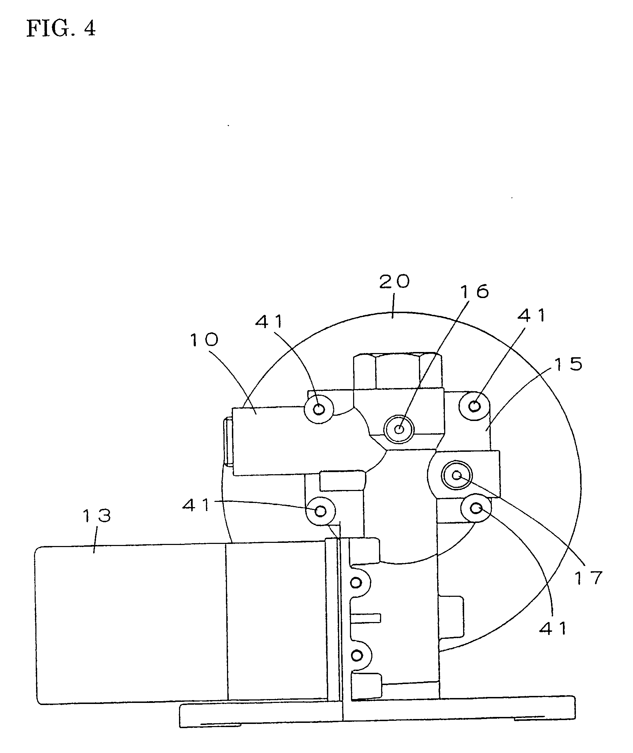

As shown in Figs. 2 to 4, the pump 10 is a plunger type pump having a piston 11 and a cylinder 12. The pump 11 is reciprocatingly driven through a cam mechanism 14 by a driving motor 13. The lubricating oil storage 20 is disposed above the pump 10. An attaching portion 15 for the switching valve 30 is formed on the lower side of the pump 10. As shown in Fig. 4, in the attaching portion on the lower side of the pump 10, a discharge opening 16 for discharging the lubricating oil is formed and a return opening 17, which communicates with the lubricating oil storage 20 and is opened therein, is exposed and arranged.

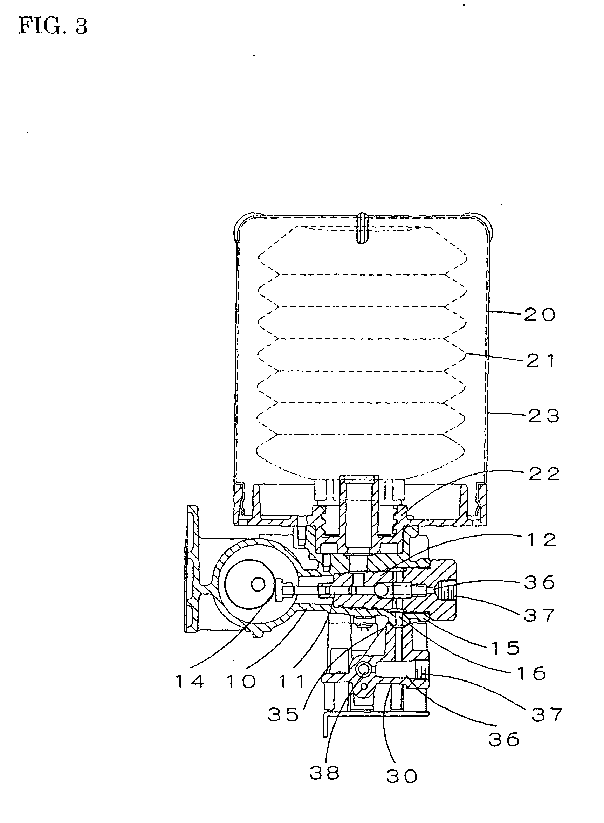

Referring to Fig. 3, the lubricating oil storage 20 has a cartridge 21 of the lubricating oil made of grease, a cartridge mounting portion 22 to which the cartridge 21 is attached, and a cover 23 which is attached to the cartridge mounting portion 22 to cover the cartridge 21.

Referring to Figs. 2, 5A, 5B, 6A, 6B, and 6C, the switching valve 30 comprises a solenoid-operated valve and has at least four ports, namely, a primary-side discharge port 31 which is connected to the discharge opening 16 of the pump 10, a primary-side open port 32 which is connected to the return opening 17 of the pump 10 and is opened in the lubricating oil storage 20, a secondary-side depressurization line port 33 which is connected to the depressurization line Pt, and a secondary-side non-depressurization line port 34 which is connected to the non-depressurization line Ps. The primary-side discharge port 31 and the primary-side open port 32 are formed on an upper portion 35 to be fixed of the switching valve 30. The secondary-side depressurization line port 33 and the secondary-side non-depressurization line port 34 are formed frontward. A plug 37 closes a vacant port 36, which is formed for the sake of processing.

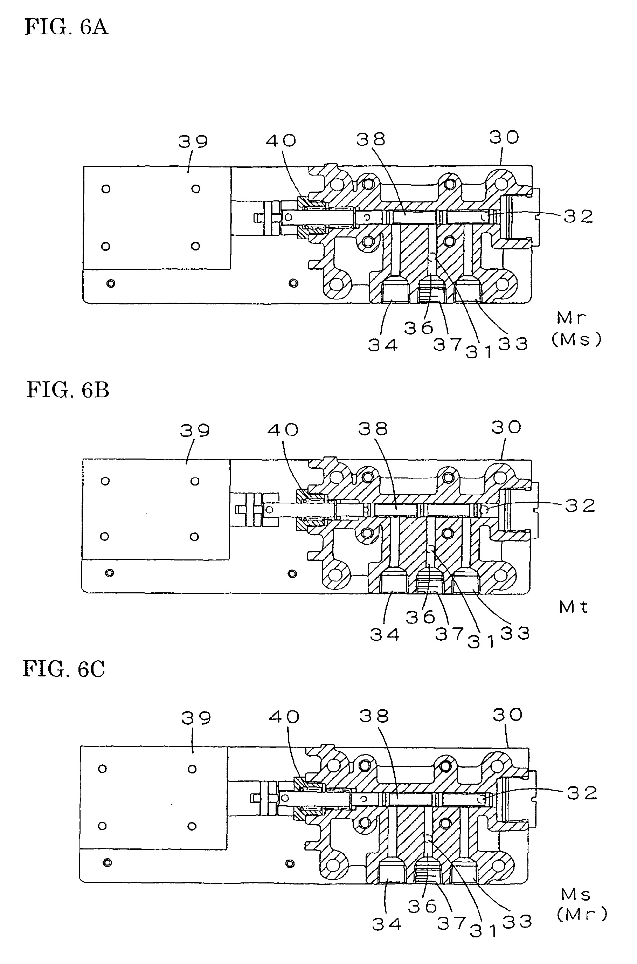

As shown in Figs. 6A, 6B, and 6C, the switching valve 30 has a spool 38, a solenoid 39 for driving the spool 38, and a spring 40 for returning the spool 38 to a normal position. At ON time when the solenoid 39 is energized, the spool 38 connects the primary-side discharge port 31 to the secondary-side depressurization line port 33 and also shuts off the primary-side open port 32 and the secondary-side non-depressurization line port 34 from the primary-side discharge port 31 and the secondary-side depressurization line port 33 (Fig. 6B). At OFF time when the solenoid 39 is not energized, the spool 38 is returned to the normal position by the spring 40, thereby connecting the primary-side discharge port 31 to the secondary-side non-depressurization line port 34 and also connecting the primary-side open port 32 to the secondary-side depressurization line port 33 (Figs. 6A and 6C).

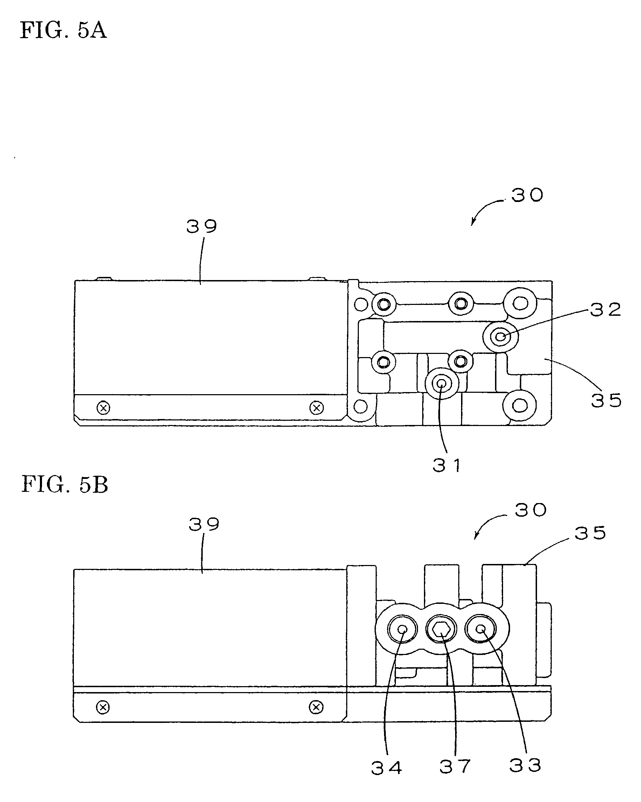

The switching valve 30 is formed so as to be detachable from the pump 10. Specifically, the attaching portion 15 of the pump 10 and the fixed portion 35 of the switching valve 30 are formed so that they are come into tight contact with each other. Referring to Fig. 4, four female threads 41 to which the switching valve 30 is fixed are formed on the pump 10. Referring to Fig. 5A, four attachment holes 42 through which bolts (not shown) to be fitted to the female threads 41 of the pump 10 are inserted and through which the bolt heads press the switching valve 30 against the pump 10 are formed in the switching valve 30. The attaching portion 15 of the pump 10 and the fixed portion 35 of the switching valve 30 are brought in tight contact, and the bolts are inserted into the attachment holes 42 and are then fitted to the female threads 41, thereby attaching the switching valve 30 to the pump 10. When the bolts are loosened and then detached, the switching valve 30 is detached. Accordingly, the switching valve 30 can be easily integrated with the pump 10. Since the switching valve 30 is integrated with the pump 10, the device is compact in size and can be handled easier as compared with a case where the switching valve 30 is separately disposed.

Instead of the switching valve 30, a block (not shown), which is fixed to the attaching portion 15 of the pump 10 through bolts and in which a connection opening communicating only with the discharge opening 16 of the pump 10 is formed, can be attached. Consequently, the device can be used as a lubricating oil feeding device exclusively used for, e.g., the non-depressurization line Ps.

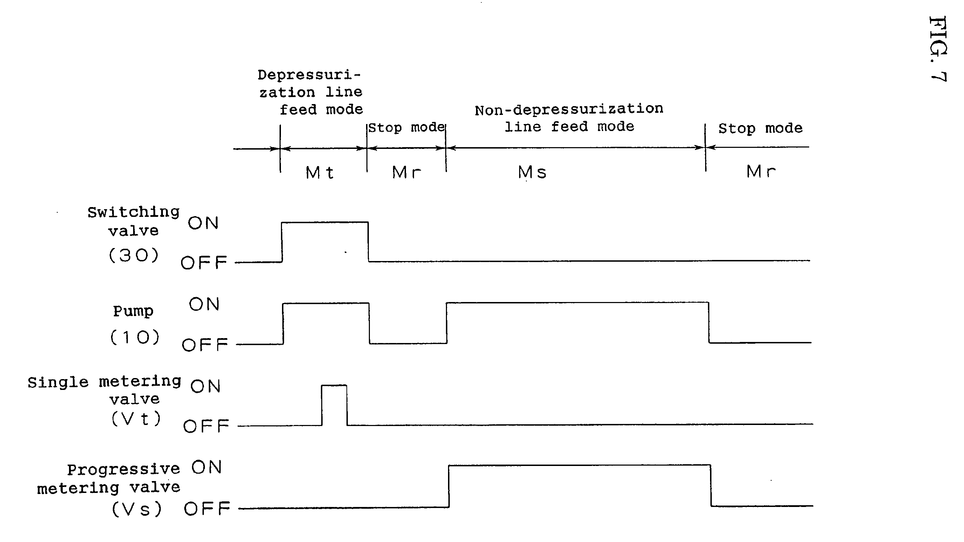

The lubrication system according to the embodiment has a controller 50 for controlling the driving motor 13 of the pump 10 and the solenoid 39 of the switching valve 30 in the lubricating oil feeding device S. As shown in Fig. 7, the controller 50 has a function to set the operation to any one of three modes, namely, stop mode Mr in which the motion of the pump 10 and the solenoid 39 are set to an OFF state, depressurization line feed mode Mt in which the motion of the pump 10 and the solenoid 39 are turned on or off synchronously with each other to feed the lubricating oil to the depressurization line Pt, and non-depressurization line feed mode Ms in which when the solenoid 39 is turned off, the motion of the pump 10 is turned on or off to feed the lubricating oil to the non-depressurization line Ps.

The function of the controller 50 is realized by using the function of a timer or microcomputer which can set time. The orders or time of the modes are set according to the lubricating conditions as appropriate.

The lubrication system and the lubricating oil feeding device S according to the embodiment are used as follows.

As shown in Fig. 1, the depressurization line Pt is connected to the secondary-side depressurization line port 33 of the switching valve 30 and the non-depressurization line Ps is connected to the secondary-side non-depressurization line port 34. In this instance, as compared with the case where the switching valve 30 is separately provided, the piping operation is easily realized, so that the working efficiency of installation is raised.

When lubrication is performed in the lubrication system and the lubricating oil feeding device S according to the embodiment, the following operation is performed. In this instance, as shown in Fig. 7, a case where the lubricating oil feeding device S is operated by the controller 50 in such a manner that one cycle includes the depressurization line feed mode Mt, the stop mode Mr, the non-depressurization line feed mode Ms, and the stop mode Mr in the order will now be described.

When the controller 50 shifts the operation from the stop mode Mr (Fig. 6A) to the depressurization line feed mode Mt (Fig. 6B) and then operates the lubricating oil feeding device S, as shown in Figs. 6B and 7, the motion of the pump 10 and the switching valve 30 are turned on synchronously with each other. Accordingly, as shown in Fig. 6B, in the switching valve 30, since it is ON time when the solenoid 39 is energized, the spool 38 connects the primary-side discharge port 31 to the secondary-side depressurization line port 33 and also shuts off the primary-side open port 32 and the secondary-side non-depressurization line port 34 from the primary-side discharge port 31 and the secondary-side depressurization line port 33. Consequently, the lubricating oil is fed to the depressurization line Pt.

As shown in Fig. 7, after the predetermined period, the motion of the pump 10 and the switching valve 30 are turned off synchronously with each other. Accordingly, as shown in Fig. 6C, in the switching valve 30, since it is OFF time when the solenoid 39 is not energized, the spool 38 is returned to the normal position by the spring 40, thereby connecting the primary-side discharge port 31 to the secondary-side non-depressurization line port 34 and also connecting the primary-side open port 32 to the secondary-side depressurization line port 33. Consequently, since the primary-side open port 32 is connected to the secondary-side depressurization line port 33, an oil pressure passes through on the lubricating oil storage 20 side, so that the depressurization line Pt is depressurized.

Since the lubricating oil is pressurized or depressurized in the depressurization line Pt by turning the pump 10 and the switching valve 30 on or off, the single metering valve Vt is operated once to discharge the lubricating oil.

Subsequently, as shown in Fig. 7, when the controller 50 shifts the operation of the lubricating oil feeding device S to the stop mode Mr, the motion of the pump 10 and the switching valve 30 enter the OFF state, so that the single metering valve Vt and the progressive metering valve Vs are not operated.

After the elapse of predetermined period in this state, as shown in Fig. 7, the controller 50 allows the lubricating oil feeding device S to operate in the non-depressurization line feed mode Ms and then turns the motion of the pump 10 on while the switching valve 30 is turned off. Consequently, as shown in Fig. 6C, in the switching valve 30, since it is OFF time when the solenoid 39 is not energized, the spool 38 connects the primary-side discharge port 31 to the secondary-side non-depressurization line port 34 and also connects the primary-side open port 32 to the secondary-side depressurization line port 33, thereby feeding the lubricating oil from the pump 10 to the non-depressurization line Ps for the predetermined period. Consequently, in the progressive metering valve Vs, the pistons are sequentially reciprocated by pressurizing the lubricating oil, thereby discharging the lubricating oil.

After that, as shown in Fig. 7, the controller 50 shifts the operation of the lubricating oil feeding device S to the stop mode Mr, thereby turning the motion of the pump 10 off. Accordingly, the motion of the pump 10 and the switching valve 30 enter the OFF state, so that the single metering valve Vt and the progressive metering valve Vs are not operated.

Repeating the above cycle allows the lubrication system to function. In this case, the lubricating oil can be fed through the pump 10 alone. Moreover, the depressurization can be realized by switching the switching valve 30. Accordingly, it is unnecessary to provide an exclusive pump for each line system, so that the system can be simplified and the cost can be reduced as much as the unnecessary pumps.

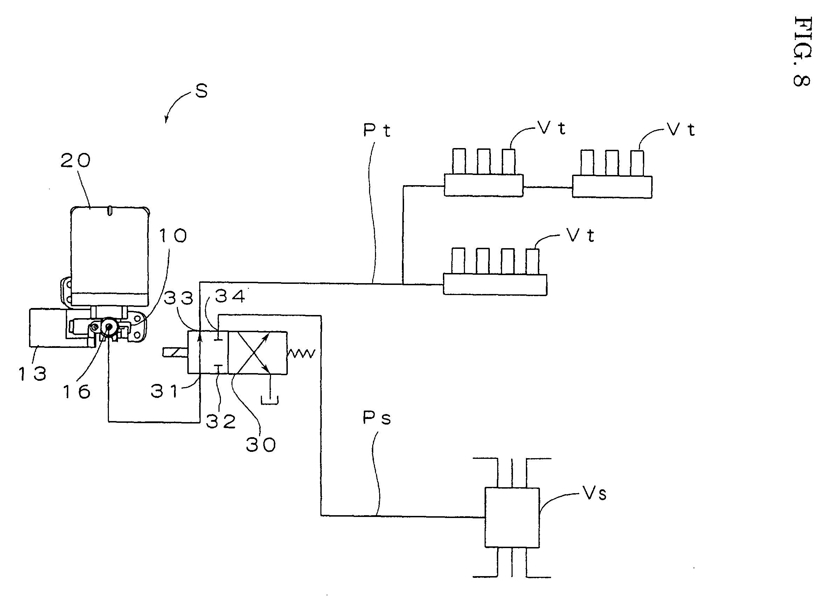

Fig. 8 shows a lubrication system according to another embodiment of the present invention. The present embodiment is different from the foregoing embodiment with respect to a point that the pump 10 and the switching valve 30, which are used to feed the lubricating oil, are separated from each other. In the lubrication system, lubrication similar to the above can be realized by controlling the motion of the pump 10 and the switching valve 30.

The embodiments have been explained with respect to the case where the lubrication system and the lubricating oil feeding device S are applied to the resin or metal injection molding machine. The invention is not limited to the above but the invention can be applied to any apparatus. Modifications can be made as appropriate.

The embodiments have been described with respect to the case where grease was used as lubricating oil in the lubrication system and the lubricating oil feeding device S. The invention is not limited to the above. It is a matter of course that the invention can be applied to the case using oil as lubricating oil.

Moreover, when the pressure in the depressurization line Pt is different from that in the non-depressurization line Ps, a relief valve can be provided for each line or the pump can include a relief valve which can be switched synchronously with the switching valve.

### INDUSTRIAL APPLICABILITY

The lubrication system and the lubricating oil feeding device having the above constitution can be utilized for various extruding machines and machine tools in addition to the resin and metal injection molding machines.

## Claims

1. A lubrication system having two system lines of a depressurization line (Pt), to which lubricating oil is fed and in which depressurization is needed, and a non-depressurization line (Ps), to which the lubricating oil is fed and in which the depressurization is not needed, said system **characterized in that**:
- the depressurization line (Pt) and the non-depressurization line (Ps) which are arranged in parallel to each other;
- a pump (10) feeds the lubricating oil to the depressurization line (Pt) and the non-depressurization line (Ps) ; and
- a switching valve (30) is connected to the pump (10) and is switched so that the lubricating oil from the pump (10) can be fed to the depressurization line (Pt) or the non-pressurization line (Ps) .

2. The system according to claim 1, **characterized in that** the lubricating oil is stored in a lubricating oil storage (20) and **in that** the switching valve (30) is switched so that the depressurization line (Pt) can be depressurized at least when the pump (10) is not connected to the depressurization line (Pt).

3. The system according to claim 2, **characterized in that** the switching valve (30) has at least four ports of a primary-side discharge port (31) which is connected to a discharge opening of the pump (10), a primary-side open port (32) which is opened on the lubricating oil storage (20) side, a secondary-side depressurization line port (33) which is connected to the depressurization line (Pt), and a secondary-side non-depressurization line port (34) which is connected to the non-depressurization line (Ps) ; and
- said switching valve (30) comprises a solenoid-operated valve which connects the primary-side discharge port {31) to the secondary-side depressurization line port (33) and shuts off the primary-side open port (32) and the secondary-side non-depressurization line port (34) from the primary-side discharge port (31) and the secondary-side depressurization line port (33) at ON time when the solenoid-operated valve is energized, and which connects the primary-side discharge port (31) to the secondary-side non-depressurization line port (34) and connects the primary-side open port (32) to the secondary-side depressurization line port (33) at OFF time when the solenoid-operated valve is not energized.

4. The system according to claim 3, **characterized in that** a controller (50) sets the operation to any one of three modes of a stop mode (Mr) in which the motion of the pump (10) and the solenoid-operated valve are set to an OFF state; a depressurization line feed mode (Mt) in which the motion of the pump (10) and the solenoid-operated valve are turned on or off synchronously with each other to feed the lubricating oil to the depressurization line (Pt); and a non-depressurization line feed mode (Ms) in which when the solenoid-operated valve is turned off, the motion of the pump (10) is turned on or off to feed the lubricating oil to the non-depressurization line (Ps).

5. The system according to claim 2, 3, or 4, **characterized in that** the valve, which is arranged in the depressurization line (Pt), comprises a single piston, which is reciprocated due to pressurization and depressurization of the lubricating oil to discharge the lubricating oil, and a single metering valve (Vt) having a discharge opening corresponding to the piston; and the valve, which is arranged in the non-depressurization line (Ps), comprises a plurality of pistons, which are sequentially reciprocated due to pressurization of the lubricating oil to discharge the lubricating oil, and a progressive metering valve (Vs) having plural pairs of discharge ports, each pair corresponding to each piston.

6. The system according to claim 1, 2, 3, 4 or 5, **characterized in that** the switching valve (30) is integrated with the pump (10) to be connected thereto.

7. The system according to claim 6, **characterized in that** the switching valve (30) can be detached from the pump (10).

## Patentansprüche

1. Schmierungssystem mit zwei Systemleitungen, einer Druckablassleitung (Pt), welcher Schmieröl zugeführt wird und in welcher ein Druckablass notwendig ist, und eine Nicht-Druckablassleitung (Ps), zu der Schmieröl zugeführt wird, und in der ein Druckablass nicht notwendig ist, wobei das System **dadurch gekennzeichnet ist:**
- **dass** die Druckablassleitung (Pt) und die Nicht-Druckablassleitung (Ps) parallel zueinander angeordnet sind;
- **dass** eine Pumpe (10) das Schmieröl zu der Druckablassleitung (Pt) und der Nicht-Druckablassleitung (Ps) zuführt; und
- **dass** ein Schaltventil (30) mit der Pumpe (10) verbunden ist und so umgeschaltet wird, dass das Schmieröl von der Pumpe (10 der Druckablassleitung (Pt) oder der Nicht-Druckablassleitung (Ps) zugeführt werden kann.

2. System nach Anspruch 1, **dadurch gekennzeichnet, dass** das Schmieröl in einem Schmierölspeicher (20) gespeichert ist und dass das Schaltventil (30) so umgeschaltet wird, dass die Druckablassleitung (Pt) mindestens dann in einen Druckablass gesetzt werden kann, wenn die Pumpe (10) nicht mit der Druckablassleitung (Pt) verbunden ist.

3. System nach Anspruch 2, **dadurch gekennzeichnet, dass** das Schaltventil (30) mindestens vier Anschlüsse aufweist: mit einem primärseitigen Abgabeanschluss (31), der mit einer Abgabeöffnung der Pumpe (10) verbunden ist, einem primärseitigen Offenanschluss (32), der auf der Schmierölspeicherseite (20) geöffnet ist, einem sekundärseitigen Druckablassleitungsanschluss (33), der mit der Druckablassleitung (Pt) verbunden ist, und einem sekundärseitigen Nicht-Druckablassleitungsanschluss (34), der mit der Nicht-Druckablassleitung (Ps) verbunden ist; und
- dass das Schaltventil (30) ein spulengesteuertes Ventil umfasst, welches den primärseitigen Abgabeanschluss (31) mit dem sekundärseitigen Druckablassleitungsanschluss (33) verbindet und den primärseitigen Offenanschluss (32) und den sekundärseitigen Nicht-Druckablassleitungsanschluss (34) von dem primärseitigen Abgabeanschluss (31) und dem sekundärseitigen Druckablassleitungsanschluss (33) bei der AN-Zeit abschliesst, wenn das spulengesteuerte Ventil mit Energie versehen wird, und welches den primärseitigen Abgabeanschluss (31) mit dem sekundärseitigen Nicht-Druckablassleitungsanschluss (34) verbindet und den primärseitigen Offenanschluss (32) mit dem sekundärseitigen Druckablassleitungsanschluss (33) bei der AUS-Zeit verbindet, wenn das spulengesteuerte Ventil nicht mit Energie versorgt wird.

4. System nach Anspruch 3, **dadurch gekennzeichnet, dass** eine Steuereinheit (50) den Betätigungsmodus auf einen von drei Modi einstellt, mit einem Stoppmodus (Mr), in dem die Bewegungen der Pumpe (10) und des spulengesteuerten Ventils in den AUS-Zustand gesetzt werden; einen Druckablassleitungszuführungsmodus (Mt), in dem die Bewegungen der Pumpe (10) und des spulengesteuerten Ventils synchron miteinander An oder Aus geschaltet werden, um das Schmieröl zu der Druckablassleitung (Pt) zu führen; und ein Nicht-Druckablassleitungszuführungsmodus (Ms), in dem, wenn das spulengesteuerte Ventil ausgeschaltet wird, die Bewegung der Pumpe (10) an- oder ausgeschaltet wird, um das Schmieröl der Nicht-Druckablassleitung (Ps) zuzuführen.

5. System nach Anspruch 2, 3 oder 4, **dadurch gekennzeichnet, dass** das Ventil, welches in der Druckablassleitung (Pt) angeordnet ist, einen einzelnen Kolben umfasst, der durch die Unterdrucksetzung und den Druckablass des Schmieröls hin- und herbewegt wird, um das Schmieröl abzugeben und ein Einzeldosisventil (Vt), welches eine Abgabeöffnung hat, die dem Kolben entspricht; und dass das Ventil, welches in der Nicht-Druckablassleitung (Ps) angeordnet ist, eine Vielzahl von Kolben, die in sequenzieller Weise aufgrund des unter Druck Setzens des Schmieröls hin- und her bewegt werden, um das Schmieröl abzugeben, und ein fortschreitendes Abgabeventil (Vs) umfasst, welches eine Vielzahl von Paaren von Abgabeanschlüssen aufweist, wobei jedes Paar einem Kolben entspricht.

6. System nach einem der Ansprüche 1, 2, 3, 4 oder 5, **dadurch gekennzeichnet, dass** das Umschaltventil (30) mit der Pumpe (10) einstückig ausgestaltet ist, um mit ihr verbunden zu sein.

7. System nach Anspruch 6, **dadurch gekennzeichnet, dass** das Schaltventil (30) von der Pumpe (10) abgenommen werden kann.

## Revendications

1. Système de lubrification doté de deux canalisations de système dont une canalisation (Pt) en dépression, alimentée en huile de lubrification et dans laquelle une dépression est nécessaire, et une canalisation (Ps) sans dépression, alimentée en huile de lubrification et dans laquelle la dépression n'est pas nécessaire, ledit système étant **caractérisé en ce que** :
- la canalisation (Pt) en dépression et la canalisation (Ps) sans dépression sont disposées parallèlement l'une à l'autre ;
- une pompe (10) alimente en huile de lubrification la canalisation (Pt) en dépression et la canalisation (Ps) sans dépression ; et
- une vanne (30) de commutation est reliée à la pompe (10) et est commutée de telle sorte que l'huile de lubrification provenant de la pompe (10) puisse alimenter la canalisation (Pt) en dépression ou la canalisation (Ps) sans dépression.

2. Système selon la revendication 1, **caractérisé en ce que** l'huile de lubrification est emmagasinée dans une réserve (20) d'huile de lubrification et **en ce que** la vanne (30) de commutation est commutée de telle sorte que la canalisation (Pt) en dépression puisse être mise en dépression au moins lorsque la pompe (10) n'est pas reliée à la canalisation (Pt) en dépression.

3. Système selon la revendication 2, **caractérisé en ce que** la vanne (30) de commutation comporte au moins quatre orifices, dont un orifice (31) de refoulement côté primaire relié à une ouverture de refoulement de la pompe (10), un orifice ouvert (32) côté primaire qui s'ouvre du côté de la réserve (20) d'huile de lubrification, un orifice (33) de canalisation en dépression côté secondaire, relié à la canalisation (Pt) en dépression et un orifice (34) de canalisation sans dépression côté secondaire, relié à la canalisation (Ps) sans dépression ; et
- **en ce que** ladite vanne (30) de commutation comporte une vanne actionnée par solénoïde qui relie l'orifice (31) de refoulement côté primaire à l'orifice (33) de canalisation en dépression côté secondaire et isole l'orifice ouvert (32) côté primaire et l'orifice (34) de canalisation sans dépression côté secondaire de l'orifice (31) de refoulement côté primaire et de l'orifice (33) de canalisation en dépression côté secondaire en période de MARCHE lorsque la vanne actionnée par solénoïde est alimentée, et qui relie l'orifice (31) de refoulement côté primaire à l'orifice (34) de canalisation sans dépression côté secondaire et relie l'orifice ouvert (32) côté primaire à l'orifice (33) de canalisation en dépression côté secondaire en période d'ARRET lorsque la vanne actionnée par solénoïde n'est pas alimentée.

4. Système selon la revendication 3, **caractérisé en ce qu'**un contrôleur (50) prescrit le fonctionnement dans l'un quelconque de trois modes, dont un mode (Mr) d'arrêt dans lequel le mouvement de la pompe (10) et celui de la vanne actionnée par solénoïde sont placés dans un état d'ARRET ; un mode (Mt) d'alimentation de la canalisation en dépression dans lequel le mouvement de la pompe (10) et celui de la vanne actionnée par solénoïde sont mis en marche ou arrêtés de façon synchronisée l'un avec l'autre afin d'alimenter en huile de lubrification la canalisation (Pt) en dépression ; et un mode (Ms) d'alimentation de la canalisation sans dépression dans lequel, quand la vanne actionnée par solénoïde est arrêtée, le mouvement de la pompe (10) est mis en marche ou arrêté afin d'alimenter en huile de lubrification la canalisation (Ps) sans dépression.

5. Système selon la revendication 2, 3 ou 4, **caractérisé en ce que** la vanne disposée sur la canalisation (Pt) en dépression, comporte un piston unique, animé d'un mouvement de va-et-vient du fait de la mise en pression et en dépression de l'huile de lubrification en vue de refouler l'huile de lubrification, et une valve doseuse (Vt) unique présentant une ouverture de refoulement correspondant au piston ; et
**en ce que** la vanne disposée sur la canalisation (Ps) sans dépression comporte une pluralité de pistons, animés séquentiellement d'un mouvement de va-et-vient du fait de la mise en pression de l'huile de lubrification en vue de refouler l'huile de lubrification, et une valve doseuse (vs) progressive présentant une pluralité de paires d'orifices de refoulement, chaque paire correspondant à un piston.

6. Système selon la revendication 1, 2, 3, 4 ou 5, **caractérisé en ce que** la vanne (30) de commutation est intégrée à la pompe (10) pour y être reliée.

7. Système selon la revendication 6, **caractérisé en ce que** la vanne (30) de commutation peut être séparée de la pompe (10).
